# EUROPÄISCHE PATENTANMELDUNG

(11) **EP 3 136 549 A1**
(43) Veröffentlichungstag der Anmeldung: **01.03.2017**
(21) Anmeldenummer: 15182109.7
(22) Anmeldetag: 24.08.2015
(51) Int. Cl.: H02K 1/24, H02K 1/32, H02K 9/18

(54) **SYNCHRONE RELUKTANZMASCHINE**

(71) Anmelder: Siemens Aktiengesellschaft, 80333 München (DE)
(72) Erfinder: Zeichfüßl, Roland, 94099 Ruhstorf a. d. Rott (DE)

(57) **Zusammenfassung**

Die Erfindung betrifft eine synchrone Reluktanzmaschine (20), insbesondere Motor oder Generator mit einer Leistung größer 300kW, mit einem Stator (1) und einem durch einen Luftspalt (19) beabstandeten, um eine Achse (18) drehbar gelagerten Rotor (3), dessen axial hintereinander angeordneten Bleche jeweils eine anisotropische magnetische Struktur aufweisen, die durch Flusssperrabschnitte und Flussleitabschnitte gebildet ist und wobei die Flusssperrabschnitte und Flussleitabschnitte Pole des Rotors (3) bilden, wobei diese Flusssperrabschnitte axial verlaufende Kanäle bilden und eine axiale Luftströmung ermöglichen, wobei das Blechpaket des Rotors (3) axial in zumindest zwei Teilblechpakete (30,31,32,33) unterteilt ist, wobei in Umfangsrichtung betrachtet jeweils zwischen den Polen im Bereich der q-Achse und axial betrachtet zwischen den Teilblechpaketen (30,31,32,33) radiale Kühlspalte (6) vorhanden sind.

## Beschreibung

Die Erfindung betrifft eine synchrone Reluktanzmaschine, insbesondere einen Motor oder einen Generator einer Windkraftanlage mit einem Stator und einem durch einen Luftspalt beabstandet um eine Achse drehbar gelagerten Rotor, der eine anisotrope magnetische Struktur aufweist, die durch im wesentlichen axial hintereinander angeordnete Flusssperrabschnitte gebildet ist.

Die Erfindung betrifft ebenso eine Windkraftanlage mit einem derart ausgeführten Generator.

Als dynamoelektrische Maschinen, also Motoren oder Generatoren mit Leistungen ab einigen 100kW werden in der Regel Asynchronmaschinen mit Käfigläufern oder Synchronmaschinen eingesetzt. Diese Maschinen weisen jedoch einen aufwändig herzustellenden Rotor mit einem Kurzschlusskäfig bzw. einer Polwicklung auf.

Maschinen in dieser Leistungsklasse benötigen im Allgemeinen eine Kühlung des Rotors, da die dort entstehenden Verluste nicht mehr allein durch Konvektionen abführbar sind. Somit erfolgt die Kühlung des Rotors üblicherweise durch Kühlluft, die durch Eigenbelüftung oder Fremdbelüftung erzeugt wird. Außerdem muss auch der Stator einer derartigen Maschine über die gesamte axiale Länge gleichmäßig mit Kühlluft versorgt werden. Bei diesen oben beschriebenen Maschinen wird häufig ein hoher Leistungsfaktor gefordert, um den Anteil an Blindleistung, der zum Betrieb der Maschine zur Verfügung gestellt werden muss, zu minimieren.

Bei dynamoelektrischen Maschinen dieser Leistungsklasse werden im Wesentlichen zwei Arten der primären Kühlung mit Luft unterschieden. Zum einen gibt es Maschinen, die nur in axialer Richtung von Luft durchströmt werden, wie dies beispielsweise die DE 10 2009 051 651 B4 beschreibt. Dort ist ein derartiger Kreislauf mit einer Wassermantelkühlung des Blechpakets des Stators kombiniert.

Des Weiteren gibt es dynamoelektrische Maschine, bei denen die Kühlluft auch radial durch die Maschine im speziellen durch den Stator strömt. Um dies zu ermöglichen, werden Stator- und Rotorblechpakete durch radiale Kühlschlitze unterbrochen. Dadurch kann die angeströmte Oberfläche des Luftstroms wesentlich vergrößert werden.

So beschreibt die DE 10 2012 210 120 A1 eine dynamoelektrische Maschine mit radialen Kühlschlitzen in Stator und Rotor und einem separaten Kühlkreislauf für die Wickelköpfe.

In der EP 2 403 115 A1 ist ein Konzept mit radialen Kühlschlitzen für eine permanenterregte Synchronmaschine dargestellt.

Eine synchrone Reluktanzmaschine weist im Vergleich zu den zuvor genannten Maschinen den Nachteil auf, dass der Leistungsfaktor verhältnismäßig gering ist und bei ca. 0,7 bis 0,75 liegt. Aus diesem Grund findet dieser Maschinentyp vor allem in der Leistungsklasse ab einigen 100kW nahezu keine Anwendungen.

In der EP 2 589 132 B1 wird beispielsweise die Kühlung einer Reluktanzmaschine kleinerer Größe und Leistung beschrieben. Die Kühlluft strömt bei dieser Anordnung axial durch Flussbarrieren des Rotors. Der Stator ist in axialer Richtung vollständig geschichtet.

Für Maschinen größerer Leistung ist diese Kühlung u.a. nicht geeignet, da das Verhältnis von Volumen zu Oberfläche zu gering ist und somit keine ausreichende Kühloberfläche zur Verfügung steht.

Ausgehend davon liegt der Erfindung die Aufgabe zugrunde, eine synchrone Reluktanzmaschine, insbesondere für eine höhere Leistungsklasse ab einigen 100kW zu schaffen, die bei ausreichender Kühlung einen vergleichsweise hohen Leistungsfaktor bereitstellt. Des Weiteren soll die synchrone Reluktanzmaschine für den Einsatz bei Windkraftanlagen geeignet sein.

Die Lösung der gestellten Aufgabe gelingt durch eine synchrone Reluktanzmaschine, insbesondere Motor oder Generator mit einer Leistung größer 300kW, mit einem Stator und einem durch einen Luftspalt beabstandeten, um eine Achse drehbar gelagerten Rotor, dessen axial hintereinander angeordneten Bleche jeweils eine anisotropische magnetische Struktur aufweisen, die durch Flusssperrabschnitte und Flussleitabschnitte gebildet ist und wobei die Flusssperrabschnitte und Flussleitabschnitte Pole des Rotors bilden, wobei diese Flusssperrabschnitte axial verlaufende Kanäle bilden und eine axiale Luftströmung ermöglichen, wobei das Blechpaket des Rotors axial in zumindest zwei Teilblechpakete unterteilt ist, wobei in Umfangsrichtung betrachtet jeweils zwischen den Polen im Bereich der q-Achse und axial betrachtet zwischen den Teilblechpaketen radiale Kühlspalte vorhanden sind.

Durch den erfindungsgemäßen Aufbau der synchronen Reluktanzmaschine wird nunmehr die Kühlung verbessert als auch der Unterschied der Induktivität zwischen der d- und q-Achse des Rotors der synchronen Reluktanzmaschine vergrößert, was letztlich den Leistungsfaktor der synchronen Reluktanzmaschine verbessert. In dieser Leistungsklasse ab 300kW ist dabei ein Leistungsfaktor von ca. 0,8 oder größer möglich. Der Anteil an Blindleistung, der zum Betrieb der Maschine zur Verfügung gestellt werden muss, kann somit verringert werden, was besonders bei Generatoren von Windkraftanlagen von Vorteil ist.

Der Rotor weist also in axialer Richtung betrachtet zumindest zwei Teilblechpakete auf, zwischen denen radiale Kühlspalte vorhanden sind. Jeder Flusssperrabschnitt weist also innerhalb seines axialen Verlaufs im Rotor zumindest einen radialen Kühlspalt auf.

Vorteilhafterweise werden die Zwischenelemente als magnetisch leitfähige Teile ausgebildet, so dass auch in diesen Abschnitten ein zusätzlicher magnetischer Fluss im Rotor geführt werden kann. Auch dadurch erhöht sich die Induktivität in der d-Achse. Diese Zwischenelemente als magnetisch leitfähige Teile werden vorteilhafterweise mit denselben Werkzeugen, z.B. Stanzwerkzeugen, hergestellt, wie die weiteren Bleche des Rotors. Sie sind in diesem Fall auch geblecht ausgeführt. Durch zusätzliche Bearbeitungsschritte an den Zwischenelementen z.B. Stanzen oder Schneiden können zusätzliche Optionen, größere Aussparungen, Abstandshalter, Elemente mit Lüfterwirkung in diesen Blechen vorgesehen werden.

Die magnetisch leitfähigen Teile der Zwischenelemente können jedoch nicht nur geblecht, sondern auch als massive Teile ausgeführt werden. Dies ist insbesondere dann von Vorteil, wenn die magnetisch leitfähigen Teile nicht mehr bis zum Luftspalt der synchronen Reluktanzmaschine reichen, da vor allem an der Oberfläche des Rotors mit Wirbelstromverlusten gerechnet werden muss.

Das Blechpaket des Rotors ist zumindest im Bereich der d-Achse axial durchgehend ausgeführt. Flankierende Flusssperren der d-Achse sind je nach axialer Position im Blechpaket des Reluktanzläufer zusätzlich vorhanden.

In weiteren Ausführungen kann dabei im Bereich der Kühlspalte die radiale Erstreckung der Zwischenelemente, also der Bleche der d-Achse radial reduziert ausgeführt sein, um Wirbelstromverluste zu reduzieren. Dabei orientiert sich die radiale Reduzierung der Zwischenelemente an der radialen Tiefe der jeweiligen Flusssperre.

Vorteilhafterweise kann der Unterschied in den Induktivitäten von d- und q-Achse des Rotors zusätzlich vergrößert werden, wenn das Blechpaket des Rotors axial um ca. 10% länger als das des Stators ausgeführt ist. Dadurch tritt eine weitere Verbesserung des Leistungsfaktors ein.

Ein nunmehr axial geführter Kühlluftstrom, der in den Rotor eintritt, wird je nach Flusssperrabschnitten in radiale Kühlkanäle komplett oder zumindest zum Teil radial umgelenkt. Diese Schottelemente können beispielsweise aus einem oder mehreren einzelnen Blech ausgeführt sein, die vorzugsweise magnetisch nicht leitfähig sind. Damit werden die Streuverluste reduziert.

Alternativ dazu können diese Schottelemente auch als Bleche mit Aussparungen mit einem Verschluss der Flusssperrabschnitte versehen werden, der vorzugsweise wiederum aus magnetisch nicht leitfähigem Material, wie z.B. Kunststoff besteht.

Ein über die jeweiligen Flusssperrabschnitte axial in den Rotor eingetretene Kühlluftstrom, wird anschließend - je nach Position des Flusssperrabschnitts radial in Richtung Luftspalt der synchronen Reluktanzmaschine umgelenkt. Danach tritt dieser Kühlluftstrom in radiale Kühlschlitze des Stators ein und an der Rückseite des Statorblechpakets wieder aus.

In einer Ausführungsform sind die radialen Kühlschlitze des Stators zumindest zum Teil über den radialen Kühlschlitzen des Rotors angeordnet.

In einer weiteren Ausführungsform sind die radialen Kühlschlitze des Stators auf jeden Fall nicht über den Kühlschlitzen des Rotors angeordnet. Sie befinden sich somit an unterschiedlichen axialen Positionen.

Somit wird nunmehr sowohl der Rotor als auch das Blechpaket des Stators effizient gekühlt. Am Rücken des Statorblechpakets, also auf der Außenseite des Stators - falls die synchrone Reluktanzmaschine als Innenläufer ausgeführt ist - kann die Kühlluft gesammelt werden und einem oder beiden abluftseitigen Wickelköpfen zugeführt werden, wobei auf den Weg dorthin und/oder danach eine Rückkühlung des aufgewärmten Kühlluftstromes mittels eines Wärmetauschers erfolgt.

Die Erfindung sowie weitere vorteilhafte Ausgestaltungen der Erfindung werden anhand prinzipiell dargestellter Ausführungsbeispiele näher erläutert. Dabei zeigen:
- FIG 1: einen Teillängsschnitt einer synchronen Reluktanzmaschine,
- FIG 2: einen Teillängsschnitt einer weiteren synchronen Reluktanzmaschine,
- FIG 3Aa: Blechschnitt der Teilblechpakete des Rotors,
- FIG 3Bb bis 3Bd: Blechschnitte der Zwischenelemente des Rotors,
- FIG 3Ce bis 3Cg: Blechschnitte der Schottelemente des Rotors,
- FIG 3Dh bis 3Dj: Blechschnitte der Schottelemente des Rotors mit Verschlüssen,
- FIG 4a bis 4c: Blechschnitte der Zwischenelemente des Rotors mit Lüfterflügeln,
- FIG 5a bis 5b: Blechschnitte der Schottelemente des Rotors mit verjüngten Öffnungen,
- FIG 6a bis 6c: Blechschnitte der Schottelemente des Rotors mit Teilöffnungen.

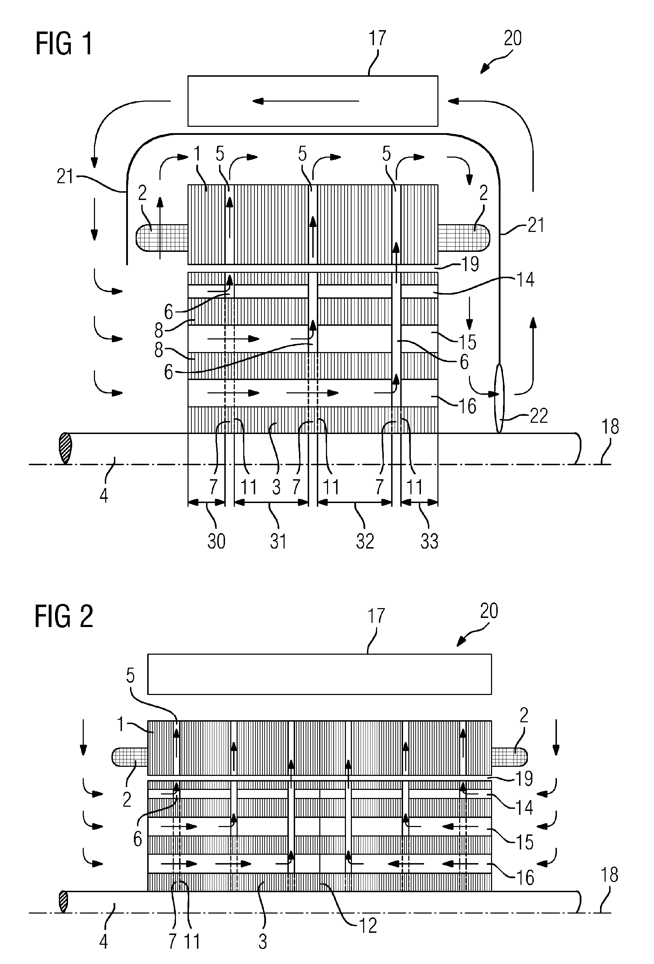

FIG 1 zeigt in einem Teillängsschnitt eine synchrone Reluktanzmaschine 20 mit einem Stator 1, der an seinen axialen Stirnseiten jeweils einen Wickelkopf 2 aufweist, die jeweils zu einem nicht näher dargestellten Wicklungssystem gehören, das in im Wesentlichen axial verlaufenden Nuten des Stators 1 eingebettet ist.

Durch einen Luftspalt 19 ist der Stator 1 von einem Rotor 3 beabstandet, wobei der Rotor 3 mit einer Welle 4 drehfest verbunden ist und um eine Achse 18 drehbar gelagert ist.

Der Rotor 3 ist als vierpoliger Reluktanzläufer ausgeführt, wobei durch Flusssperrabschnitte 14, 15, 16 und dazwischen vorhandene Flussleitabschnitte 8 in Umfangsrichtung betrachtet vier Pole gebildet sind. In diesem Ausführungsbeispiel sind in radialer Richtung betrachtet drei Flusssperrabschnitte 14, 15, 16 vorhanden.

Der erfindungsgemäße Gedanke ist nicht auf vierpolige synchronen Reluktanzmaschine 20 beschränkt sondern ist auch auf zweipolige, sechspolige, achtpolige etc. übertragbar.

Im Stator 1, der als Blechpaket ausgebildet ist, befinden sich axiale und/oder insbesondere radiale Kühlkanäle 5, die gemäß diesem Ausführungsbeispiel mit radialen Kühlkanälen 6 bzw. Kühlspalten des Rotors 3 radial fluchten.

Durch die radialen Kühlkanäle 6 des Rotors werden Teilblechpakete 30, 31, 32, 33 des Rotors 3 geschaffen, die jeweils durch Zwischenelemente 7 zumindest im Bereich der q-Achse voneinander beabstandet sind.

Die radialen Kühlkanäle 5 des Stators 1 und die radialen Kühlkanäle 6 des Rotors 3 unterscheiden sich in Anzahl und axialer Positionierung im axialen Verlauf des jeweiligen Blechpaketes von Stator 1 und Rotor 3. Das radiale Fluchten der Kühlkanäle 5,6 tritt entweder gar nicht, bei allen oder lediglich bei einigen vorgegebenen Kühlkanälen 5,6 ein.

Die Flusssperrabschnitte 14, 15, 16 bilden im Wesentlichen axial verlaufende Kühlkanäle, durch die ein Kühlluftstrom geführt werden kann. Durch dementsprechend ausgestaltete Schottelemente 11 kann nunmehr je nach Ausbildung dieser Schottelemente 11 der oberste Flusssperrabschnitt 14 oder der mittlere Flusssperrabschnitt 15 oder der unterste Flusssperrabschnitt 16 in seinem Verlauf des Kühlmittelstroms und Kühlmitteldurchsatz beeinflusst werden. Dabei wird entweder der gesamte in einem der Flusssperrabschnitte 14, 15, 16 befindliche axial verlaufende Kühlluftstrom umgelenkt und radial über den Luftspalt 19 gegebenenfalls in einen dazu korrespondierenden Kühlkanal 5 des Stators 1 geführt oder es wird nur ein Teil des Kühlluftstroms radial umgelenkt.

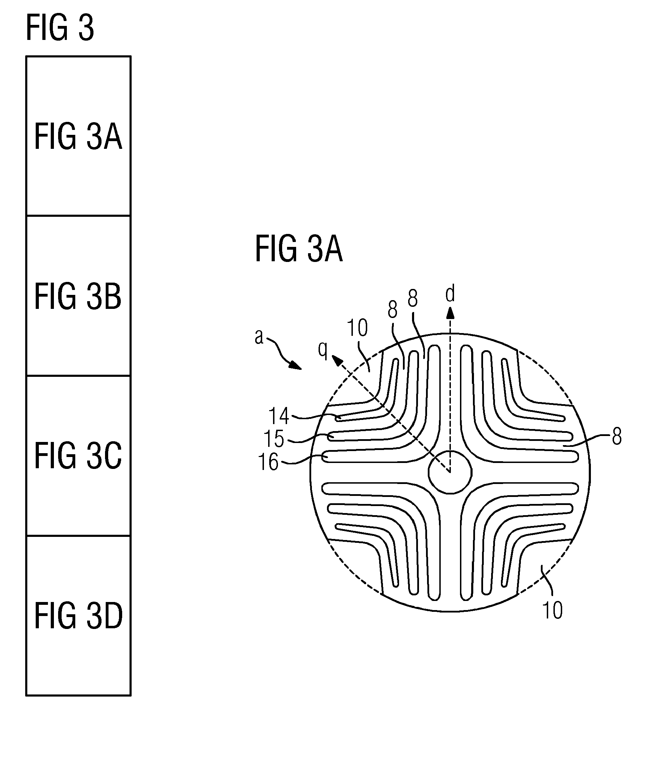

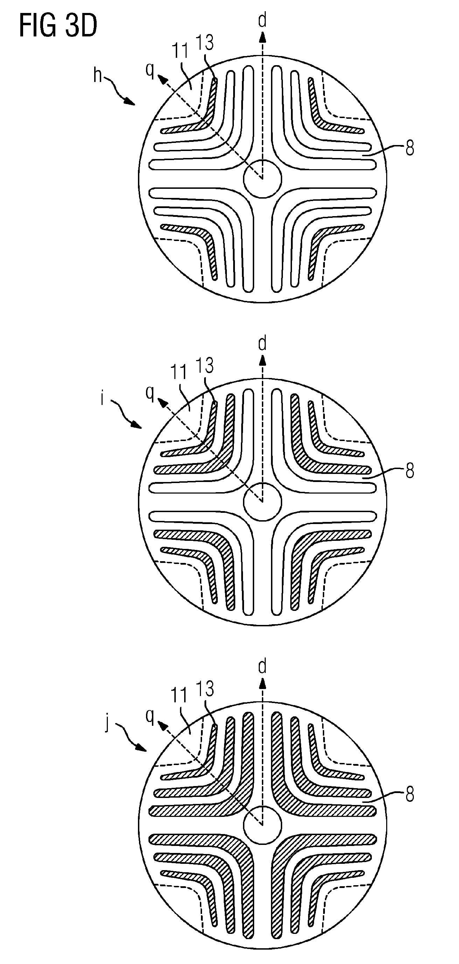

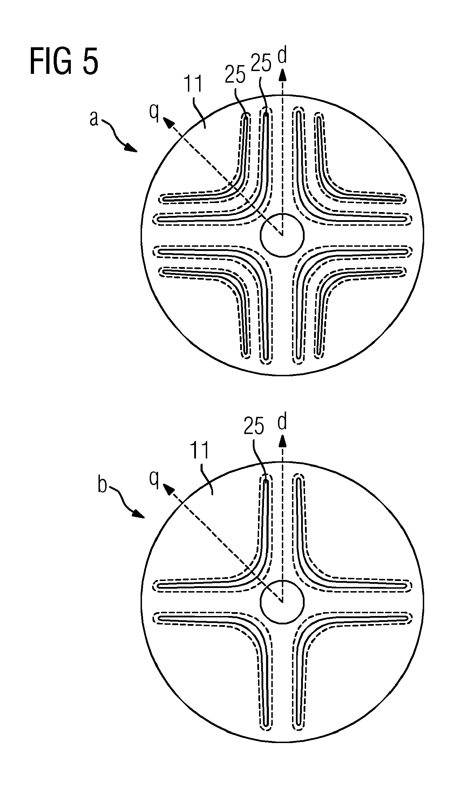

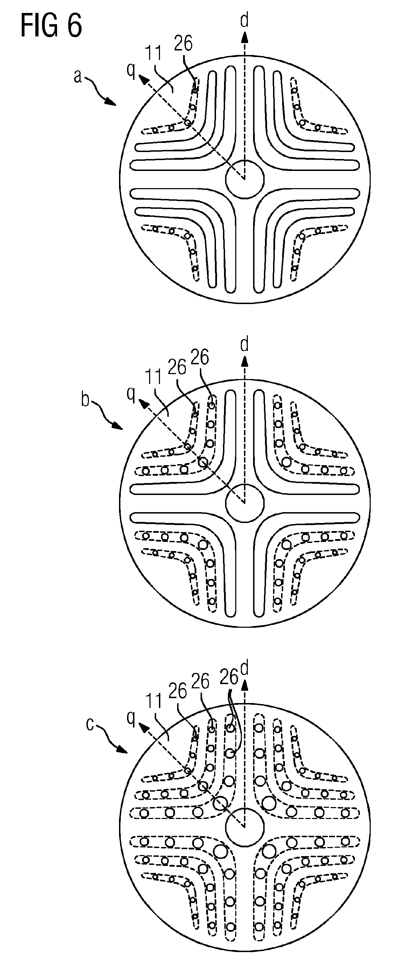

Eine axial verlaufende Flusssperre muss ggf. auch zwei oder mehrere seiner radialen Kühlspalte 6 mit Kühlluft möglichst gleichmäßig "versorgen". Dazu werden die Durchtrittsöffnungen 25, 26 in den Schottelementen 11 gemäß FIG 5, 6 strömungsmäßig dementsprechend dimensioniert, indem pro Flusssperre 11 z.B. eines Blechs nach FIG 3Aa mehrere Löcher 26 oder eine reduzierte radiale Höhe bzw. Verjüngung 25 der Flusssperre 11 vorgesehen ist.

Vorteilhafterweise sind die Schottelemente 11 auch als Bleche vorzugsweise amagnetisch ausgeführt. Die Zwischenelemente 7 sind als elektromagnetisch leitfähige Teile vorgesehen, um damit auch den magnetisch leitfähigen Teil des Rotors 1, insbesondere im Bereich der d-Achse zu vergrößern, was den Leistungsfaktor der synchronen Reluktanzmaschine 20 zusätzlich verbessert.

FIG 1 zeigt eine einflutige synchrone Reluktanzmaschine 20, wobei ein Kühlluftstrom nur von einer Seite in die Maschine, insbesondere den Rotor 3 eintritt. Unabhängig davon ob die Kühlluft nunmehr radial aus dem Stator 1 und/oder axial aus dem Stator und/oder axial aus dem Rotor 3 austritt, kann sich im Anschluss an die Aufheizung in den Blechpaketen des Stators 1 und Rotors 3 ein strömungstechnisch nachgeschalteter Wärmetauscher 17 befinden, der die Kühlluft auf vorgegebene Temperaturwerte rückkühlt. Vorteilhafterweise wird dabei auch ein nicht näher dargestellter Frequenzumrichter rückgekühlt, der ebenfalls durch einen zusätzlichen oder den gleichen Wärmetauscher 17 in seinem Temperaturverhalten beeinflusst werden kann.

Prinzipiell dargestellte Umlenkelemente 21 führen die Kühlluft, optional über einen Lüfter 22 angetrieben, durch den Wärmetauscher 17. Der Wärmetauscher 17 ist nicht zwangsläufig radial über dem Stator 1 angeordnet. Der Wärmetauscher 17 kann sich beispielsweise auch axial an den Stirnseiten der synchronen Reluktanzmaschine 20 befinden.

FIG 2 zeigt eine synchrone Reluktanzmaschine 20, die zweiflutig ausgeführt ist, d.h., sowohl von der einen als auch von der anderen axialen Stirnseite des Rotors 3 tritt ein Kühlluftstrom in den Rotor 3 über die Flusssperrabschnitt 14, 15, 16 ein. Wie oben bei der einflutigen Maschine gemäß FIG 1 ausgeführt, erfolgt die Umlenkung der Kühlluft in den Flusssperrabschnitten 14, 15, 16 aufgrund der konstruktiven Gestaltung in gleicher oder ähnlicher Art und Weise.

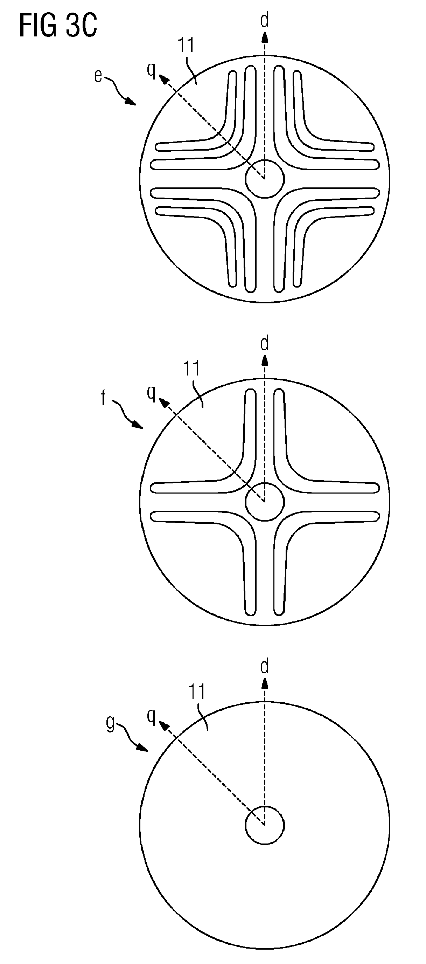

Zur Trennung der beiden aufeinander sich zu bewegenden Kühlluftströme kann ungefähr mittig von Rotor 3 und/oder Rotor 3 und Stator 1 eine Abtrennung in Form einer durchgängigen - vorzugsweise amagnetischen - Trennwand 12 vorgesehen sein. Diese ist bezüglich ihres Querschnitts, wie die Schottelemente 11 gemäß FIG 3Cg oder 3Dj ausgeführt. Damit werden die Luftströme auf beiden Seiten der Trennwand 12 voneinander, vorzugsweise strömungsmäßig entkoppelt und eine gleichmäßigere Verteilung der Kühlluft über die gesamte axiale Länge der Maschine geschaffen. Durch die amagnetische Ausführung der Trennwand 12 werden Streuverluste vermieden.

In FIG 3Aa ist ein konventionelles Rotorblech dargestellt.

Die Flusssperrabschnitte 14, 15, 16 verlaufen jeweils bogenförmig bzw. schalenförmig und symmetrisch zur jeweiligen q-Achse.

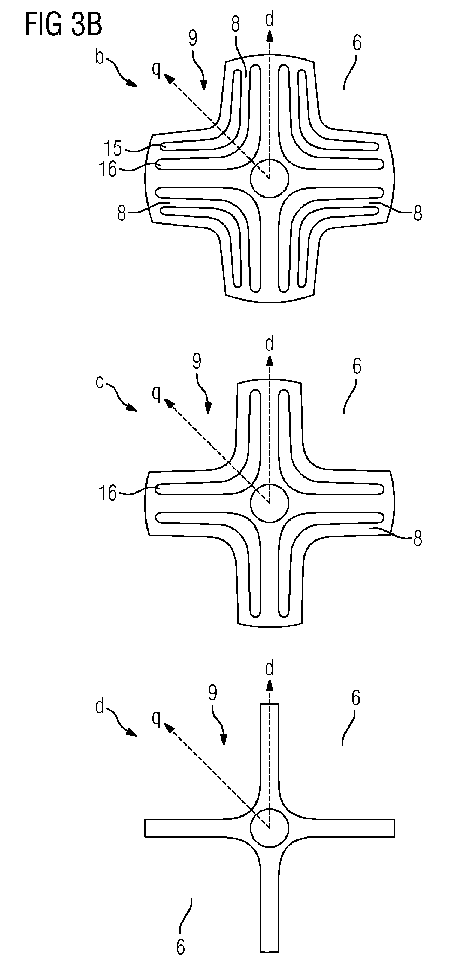

Die Zwischenelemente 7 beinhalten, wie die konventionellen Rotorbleche gemäß FIG 3Aa Aussparungen, die als Flusssperrabschnitte bezeichnet werden und die auch die Luft in axialer Richtung durch den Rotor 3 führen. In vorgegebenen axialen Abständen werden Bleche gemäß der FIG 3Bb bis 3Bd vorgesehen, die der Luft in den Flusssperrabschnitten, einen radialen Austritt aus dem jeweiligen Flusssperrabschnitt und dem Rotor 3 ermöglichen. Die dort gezeigten Aussparungen 9 reichen mindestens von einem Flusssperrabschnitt, der als axialer Kühlkanal fungiert, bis zum Außendurchmesser des Rotorblechpakets des Rotors 3, also bis zum Luftspalt 19. Jede Aussparung 9 zwischen zwei d-Achsen bildet in dieser Ausführung einen Kühlkanal 6 - so dass bei einem vierpoligen Reluktanzläufer nach jedem Teilblechpaket vier Kühlspalte 6 vorhanden sind.

Bei einem sechspoligen oder achtpoligen Reluktanzläufer sind es demnach nach jedem Teilblechpaket sechs oder acht Kühlspalte.

Die Aussparung 10 im konventionellen Rotorblech gemäß FIG 3Aa an der Außenseite des Rotors 3 dient ebenfalls als am Rotor 3 außen liegende Flusssperre.

Die außen liegende Flusssperre 10 im konventionellen Rotorblech gemäß FIG 3Aa kann Luft, aber auch amagnetisches Material aufweisen, um eine homogenen Luftspalt 19 zu erhalten. Dies reduziert insbesondere bei hochtourige Maschinen die Lärmpegel.

Mittels der magnetisch leitfähigen Zwischenelemente 7 kann nunmehr zusätzlich magnetischer Fluss im Rotor 3 geführt werden. Dadurch erhöht sich die Induktivität in der d-Achse des Rotors 3. Durch die vergleichsweise bessere Leitfähigkeit können nun auch die Flusssperren in ihren geometrischen Abmessungen, insbesondere ihrer radialen Höhe vergleichsweise größer gewählt werden, wodurch sich die Induktivität in der q-Achse senkt. Damit ergibt sich insgesamt ein größerer Unterschied in den Induktivitäten von d- und q-Achse und der Leistungsfaktor der synchronen Reluktanzmaschine 20 wird verbessert.

Die magnetisch leitfähigen Zwischenelemente 7, insbesondere des Rotors 3, können mit denselben Werkzeugen z.B. denselben Stanzwerkzeugen hergestellt werden, wie die weiteren Bleche des Rotors 3. Durch zusätzliche Bearbeitung der Bleche, z.B. zusätzliche Stanzvorgänge oder Schneidvorgänge können auch geeignete größere Aussparungen 9 oder Abstandshalter hergestellt werden. Die magnetisch leitfähigen Zwischenelemente 7 zwischen zwei Teilblechpaketen können nicht nur geblecht, sondern auch als massive einstückige Teile, insbesondere als gesinterte Teile ausgeführt sein.

Um die Wirbelstromverluste in den magnetischen Zwischenelementen 7 zu reduzieren, sind diese ebenfalls geblecht ausgeführt. Die Anzahl und/oder deren axiale Dicke der axial unmittelbar hintereinander angeordneten Zwischenelemente 7 ergibt die axiale Breite des Kühlspaltes 6.

Um den Unterschied der Induktivitäten L_{q} und L_{d} in der q- und der d-Achse des Rotors 3 zusätzlich zu steigern, wird die axiale Länge des Blechpakets des Rotors 3 größer als die axiale Länge des Blechpakets des Stators 1 gewählt. Als besonders geeignet erwies sich dabei eine 10%-ige Verlängerung des Rotorblechpakets gegenüber dem Statorblechpaket.

Um nun einen Kühlluftstrom gezielt in die radialen Kühlkanäle 6 des Rotors 3 zu lenken, unabhängig von der Ausführung gemäß der synchronen Reluktanzmaschine 20 nach FIG 1, FIG 2, oder weiterer denkbaren Ausführungen, befinden sich zwischen den konventionellen Blechen des Rotorblechpakets nach FIG 3Aa und den magnetisch leitfähigen Zwischenelementen 7 gemäß FIG 3Bd bis 3Bd auch magnetisch nicht leitfähige Schottelemente 11 z.B. gemäß FIG 3Ce bis 3Cg. Dies Schottelemente 11 bewirken eine radiale Umlenkung zumindest eines Teilluftstromes eines Flusssperrabschnitts 14,15,16 in ihren jeweiligen radialen Kühlkanal 6.

Alternativ zu den Schottelementen 11 gemäß FIG 3Ce bis 3Cg können Bleche mit Aussparungen gemäß FIG 3Aa -also magnetisch leitfähige Bleche - auch mit einem Verschluss 13 gemäß den FIG 3Dh bis 3Dj versehen werden um als Schottelement zu wirken. Dieser Verschluss 13 besteht vorzugsweise aus magnetisch nicht leitfähigem Material, wie z.B. Kunststoff.

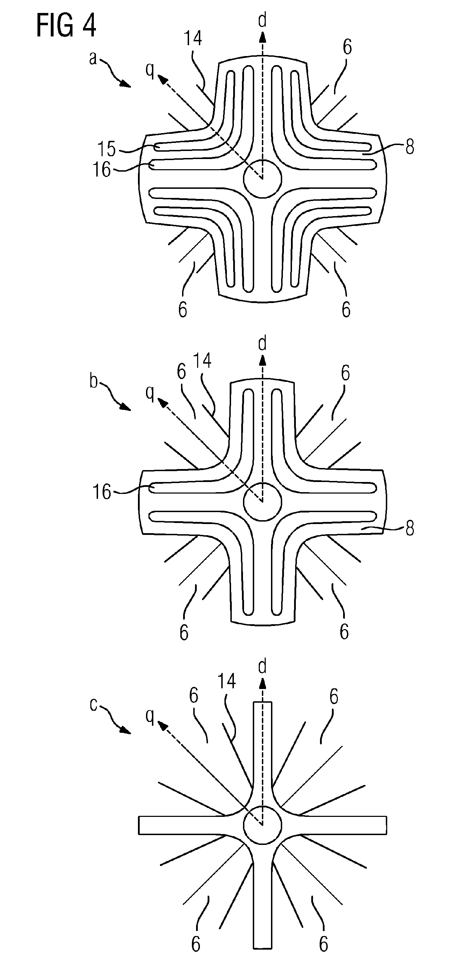

Eine Kühlung des Stators 1 mit seinem Wicklungssystem als auch des Rotors 3 erfolgt nunmehr über radiale Kühlkanäle und/oder axial verlaufende Kühlkanäle und/oder über den Luftspalt 19. Zusätzlich kann durch Einfügen von speziellen Zwischenelementen 7 gemäß FIG 4a bis FIG 4c auch eine zusätzliche Lüfterwirkung des Rotors 3 erzeugt werden. Dies geschieht insbesondere dadurch, dass die Zwischenelemente 7 gemäß FIG 4a bis 4c mit lüfterähnlichen Flügeln 14 ausgeführt sind. Diese Flügel 14 können vorteilhafterweise auch gleichzeitig als axiale Abstandshalter zwischen den Teilblechpaketen 30, 31, 32, 33 des Rotors 3 fungieren.

Pro Reluktanzläufer sind demnach auch Zwischenelementen 7 gemäß FIG 3Bb bis 3Bd und/oder nach FIG 4a bis FIG 4c möglich.

Das Blechpaket des Rotors 3 ist bei einer einflutigen Maschine gemäß FIG 1 nunmehr axial wie folgt aufgebaut. Ein erstes Teilblechpaket 30 ist mit konventionellen Blechen gemäß FIG 3Aa aufgebaut. Danach folgt ein Zwischenelement gemäß FIG 3Bb, das eine vorgegebene axiale Dicke aufweist. Es kann einteilig aber auch geblecht ausgeführt sein. Es ermöglicht dem Kühlluftstrom dieses Flusssperrabschnittes 14 radial nach außen geleitet zu werden. Im weiteren axialen Verlauf schließt sich dann ein Schottelement 11 gemäß FIG 3Ce, 3Dh, 5a oder 6a an, das den Flusssperrabschnitt 14 komplett oder nur zum Teil axial abschließt. Die Flusssperrabschnitte 15 und 16 bleiben in diesem Schottelement 11 axial offen. Von diesen Flusssperrabschnitten 15 und 16 tritt an dieser Stelle keine Luft radial nach außen.

Daran schließt sich axial ein nächstes Teilblechpaket 31 mit konventionellen Blechen gemäß FIG 3Aa an. Danach folgt ein Zwischenelement gemäß FIG 3Bc, das eine vorgegebene axiale Dicke aufweist. Es kann einteilig aber auch geblecht ausgeführt sein. Es ermöglicht dem Kühlluftstrom dieses Flusssperrabschnittes 15 radial nach außen geleitet zu werden. Es kann auch ein Teilluftstrom des Flusssperrabschnittes 14 hier nach außen gelenkt werden. Von dem Flusssperrabschnitt 16 tritt an dieser Stelle keine Luft radial nach außen.

Im weiteren axialen Verlauf schließt sich dann ein Schottelement 11 gemäß FIG 3Cf, 3Di, 5b oder 6b an, das den Flusssperrabschnitt 14, 15 komplett oder nur zum Teil axial abschließt. Mindestens der Flusssperrabschnitte 16 bleibt bei diesem Schottelement axial offen.

Daran schließt sich axial ein nächstes Teilblechpaket 32 mit konventionellen Blechen gemäß FIG 3Aa an. Danach folgt ein Zwischenelement gemäß FIG 3Bd, das eine vorgegebene axiale Dicke aufweist. Es kann einteilig aber auch geblecht ausgeführt sein. Es ermöglicht dem Kühlluftstrom dieses Flusssperrabschnittes 16 radial nach außen geleitet zu werden. Im weiteren axialen Verlauf schließt sich dann ein Schottelement 11 gemäß FIG 3Cg, 3Dj, 5c oder 6c an, das u.a. den Flusssperrabschnitt 16 komplett oder nur zum Teil axial abschließt.

Es kann auch - sofern vorhanden - ein Teilluftstrom der Flusssperrabschnitte 14,15 hier nach außen gelenkt werden. An dieser Stelle tritt die Luft dieser Flussperrabschnitte 16 komplett jeweils aus ihrem Kühlkanal 6 aus oder wird zumindest teilweise axial weiter geführt, letztendlich, in diesem Fall axial aus dem Blechpaket.

Falls die Schottelemente 11 den axialen Luftstrom nur teilweise radial umlenken, kann der in diesem Flusssperrabschnitt verbleibende "Restluftstrom" in den strömungstechnisch nachgeschalteten Schottelementen 11 der anderen Flusssperrabschnitte radial und/oder axial geführt werden.

Das Blechpaket des Rotors 3 dieser Ausführungen ist zumindest im Bereich der d-Achse axial durchgehend ausgeführt. Flankierende Flusssperren 14, 15, 16 der d-Achse sind je nach axialer Position im Blechpaket des Reluktanzläufer - welches Teilblechpaket 30, 31, 32, 33 wird betrachtet - zusätzlich vorhanden.

Bei einer zweiflutigen Maschine gemäß FIG 2 ist der oben geschriebene Aufbau ausgehend von den beiden Stirnseiten des Rotors 3 bis zur Trennwand 12 und das Kühlprinzip übertragbar. Idealerweise bildet dabei die Trennwand 12 das Schottelement, das die beiden aufeinander zuströmenden Kühlluftströme trennt und radial zum Luftspalt 19 lenkt.

Der erzeugte Kühlluftstrom durch die Flusssperrabschnitte 14, 15, 16 kann grundsätzlich durch Wellenlüfter 22 und/oder externe Lüfter bereitgestellt werden.

Durch die erfindungsgemäße Ausgestaltung der synchronen Reluktanzmaschine 20 mit einem Frequenzumrichter und den damit verbundenen höheren Leistungsfaktor dieser dynamoelektrischen Maschine kann diese auch als schnelldrehender Generator in einer Windkraftanlage eingesetzt werden, die durch Anordnung eines Wärmetauschers 17 in ihrem Temperaturverhalten optimiert werden kann.

Unter Blechpaketen oder Teilblechpaketen 30, 31, 32, 33 sind auch einstückige massive Teile zu verstehen, die ebenfalls eine magnetische Leitfähigkeit aufweisen.

Je nach den gestellten Anforderungen im industriellen Umfeld der synchronen Reluktanzmaschine 20 oder bei der Energieerzeugung durch die synchrone Reluktanzmaschine 20 wird insbesondere der Reluktanzläufer mit denjenigen Blechen, Zwischenelementen 7 oder Schottelementen 11 ausgestattet, die den besten Leistungsfaktor gewährleisten. Es ist also eine "Mischung" der oben genannten Ausführungen von Blechen, Zwischenelementen 7 und Schottelementen 11, bei ein- und zweiflutigen Maschinen aber auch bei anderen Kühlkonzepten möglich.

## Patentansprüche

1. Synchrone Reluktanzmaschine (20), insbesondere Motor oder Generator mit einer Leistung größer 300kW, mit einem Stator (1) und einem durch einen Luftspalt (19) beabstandeten, um eine Achse (18) drehbar gelagerten Rotor (3), dessen axial hintereinander angeordneten Bleche jeweils eine anisotropische magnetische Struktur aufweisen, die durch Flusssperrabschnitte und Flussleitabschnitte gebildet ist und wobei die Flusssperrabschnitte und Flussleitabschnitte Pole des Rotors (3) bilden, wobei diese Flusssperrabschnitte axial verlaufende Kanäle bilden und eine axiale Luftströmung ermöglichen, wobei das Blechpaket des Rotors (3) axial in zumindest zwei Teilblechpakete (30,31,32,33) unterteilt ist, wobei in Umfangsrichtung betrachtet jeweils zwischen den Polen im Bereich der q-Achse und axial betrachtet zwischen den Teilblechpaketen (30,31,32,33) radiale Kühlspalte (6) vorhanden sind.

2. Synchrone Reluktanzmaschine (20) nach Anspruch 1, **da- durch gekennzeichnet**, dass die radiale Erstreckung der Kühlspalte (6) vom Luftspalt (19) aus betrachtet höchstens dem radialen Abstand des jeweiligen Flusssperrabschnitts zum Luftspalt (19) entspricht.

3. Synchrone Reluktanzmaschine (20) nach Anspruch 1 oder 2, **dadurch gekennzeichnet, dass** der radiale Kühlspalt (6) zwischen zumindest zwei Teilblechpaketen des Rotors (3) durch Zwischenelemente (7) gebildet ist.

4. Synchrone Reluktanzmaschine (20) nach einem der vorhergehenden Ansprüche, **dadurch gekennzeichnet, dass** die Anzahl der radialen Kühlspalte (6) zumindest n-1 ist, wobei n die Anzahl der Teilblechpakete des Rotors (3) ist.

5. Synchrone Reluktanzmaschine (20) nach einem der vorhergehenden Ansprüche, **dadurch gekennzeichnet, dass** der Stator (1) radiale Kühlschlitze (5) aufweist, die zumindest abschnittsweise radial über den Kühlspalten (6) des Rotors (3) positioniert sind.

6. Synchrone Reluktanzmaschine (20) nach einem der vorhergehenden Ansprüche, **dadurch gekennzeichnet, dass** die Kühlspalte (6) Elemente zur Führung eines axial und/oder radialen Kühlstroms im Rotor (3) aufweisen.

7. Synchrone Reluktanzmaschine (20) nach einem der vorhergehenden Ansprüche, **dadurch gekennzeichnet, dass** die Zwischenelemente (7) in den radialen Kühlspalten (6) des Rotors (3) derart gestaltet sind, dass im Betrieb der synchronen Reluktanzmaschine (20) eine Lüfterwirkung in radialer und/oder axialer Richtung zumindest unterstützt wird.

8. Windkraftanlage mit zumindest einem Generator nach einem der vorhergehenden Ansprüche, wobei der Generator mit einem Frequenzumrichter in elektrisch leitfähiger Verbindung steht und/oder Kühlluftströme den Generator und/oder Frequenzumrichter durchströmen, wobei innerhalb oder an einer Gondel der Windkraftanlage ein Wärmeaustauscher vorgesehen ist.
